# EUROPEAN PATENT SPECIFICATION

(11) **EP 2 461 393 B1**
(45) Date of publication and mention of the grant of the patent: **14.05.2014**
(21) Application number: 11165265.7
(22) Date of filing: 09.05.2011
(51) Int. Cl.: H01M 2/04, H01M 2/22, H01M 2/30, H01M 10/04, H01M 10/42

(54) **Rechargeable Battery**
Wiederaufladbare Batterie
Batterie rechargeable

(30) Priority: 31.03.2011 US 201113077640; 02.12.2010 US 419221 P
(43) Date of publication of application: 06.06.2012
(73) Proprietor: Samsung SDI Co., Ltd., Gyeonggi-do (KR); Robert Bosch GmbH, 70442 Stuttgart (DE)
(72) Inventor: Byun, Sang-Won, Yongin-si (KR); Yoon, Hae-Kwon, Yongin-si (KR); Han, Min-Yeol, Yongin-si (KR)
(74) Representative: Gulde & Partner

(56) References cited:
- EP-A1- 2 284 932
- JP-A- 2004 319 463
- US-A1- 2010 279 156

## Description

### FIELD OF THE INVENTION

The present invention relates to a rechargeable battery reducing an external short circuit current.

### DESCRIPTION OF THE RELATED ART

Unlike a primary battery, a rechargeable battery is capable of being charged and discharged repeatedly. A small capacity rechargeable battery may be used for a small electronic device such as a mobile phone, a laptop computer, and a camcorder. A large capacity rechargeable battery may be used as a power source for driving a motor of a hybrid vehicle.

Lately, a high power rechargeable battery using high energy density non-aqueous electrolyte has been developed. The high power rechargeable battery may be used for a device requiring high power, for example, a driving motor of an electric vehicle.

The rechargeable battery includes an electrode assembly, a case housing the electrode assembly, a cap plate for closing and sealing an opening of the case, and an electrode terminal penetrating the cap plate and electrically connected to the electrode assembly. Here, the electrode assembly is formed by winding a positive electrode and a negative electrode with a separator interposed therebetween.

Since the rechargeable battery is charged and discharged repeatedly, heat may be excessively generated inside the case, and the electrolyte solution may be decomposed. Such heat generation or electrolyte solution decomposition may increase the internal pressure of the rechargeable battery. The increment of the internal pressure may cause ignition and explosion of the rechargeable battery. In order to prevent the ignition and the explosion caused by the increment of the internal pressure, an external short-circuit unit may be disposed at an outside of the case.

The external short-circuit unit shorts the positive electrode and the negative electrode of the electrode assembly from the outside of the rechargeable battery when the internal pressure of the rechargeable battery increases, thereby reducing a state of charge of the electrode assembly. However, the external short-circuit current may excessively penetrate the electrode assembly because the external short-circuit resistance value is small. Therefore, a safety problem may be caused in the electrode assembly.

The above information disclosed in this Background section is only for enhancement of understanding of the background of the invention and therefore it may contain information that does not form the prior art that is already known in this country to a person of ordinary skill in the art. JP 2004 319463 A discloses a secondary battery with a system for preventing thermal runaway reaction by an overcharge of the battery. EP 2 284 932 A1 discloses a rechargeable battery comprising a deformable plate attached to a cap plate of the battery, wherein the deformable plate is in communication with the inside of the battery and adapted to be deformed to short-circuit the first electrode and the second electrode of the battery. US 2010/0279156 A1 discloses a rechargeable battery including an electrode assembly and a cap assembly coupled to the case, wherein the cap assembly includes a cap plate and a deformable plate attached to the cap plate and configured to deform in response to an increase in pressure inside the case to electrically couple the first electrode and the second electrode to each other.

### SUMMARY OF THE INVENTION

The present invention has been made in an effort to provide a rechargeable battery having advantages of improving penetration characteristic of an external short-circuit current in an electrode assembly by reducing an external short-circuit current in case of external short-circuit.

The present invention has been made in an effort to provide a rechargeable battery having advantages of improving penetration characteristic of an external short-circuit current in an electrode assembly by reducing an external short-circuit current in case of external short-circuit.

The invention provides a rechargeable battery comprising an electrode assembly having a first electrode, a second electrode, and a separator between the first electrode and the second electrode, a case for accommodating the electrode assembly therein, a cap plate for closing an opening of the case, an electrode terminal protruding to the outside of the case and electrically connected to the second electrode, and a short-circuit inducing member, comprising a deformable plate which is installed within a short circuit hole of the cap plate and adapted to establish a short-circuit between the electrode terminal and the first electrode via the cap-plate. A resistance member is provided on the outside of the case between and electrically connecting the electrode terminal and the cap-plate, the resistance member having an electrical resistance greater than the resistance of at least one of the cap-plate and the electrode terminal, wherein the electrode terminal comprises a terminal plate provided on top of the cap plate, and the resistance member is provided between the cap plate and the terminal plate.

Through this, the electrical resistance after occurrence of a short can be increased.

Advantageously, the cap plate and the terminal plate provide sufficient area to place the resistance member in-between.

The electrode terminal preferably further comprises a column unit protruding through the cap plate, a flange formed at the column unit inside the case, and wherein the terminal plate is coupled to the column unit. The electrode terminal may further comprise a gasket installed between the column unit and the cap plate, wherein the resistance member is provided at the column unit and electrically separated from the column unit by the gasket.

In a preferred embodiment, the resistance member comprises a first protrusion facing the terminal plate and the terminal plate comprises a first groove corresponding to the first protrusion. The resistance member may additionally or alternatively comprise a second protrusion facing the cap plate, wherein the cap plate comprises a second groove corresponding to the second protrusion. Corresponding in this context means corresponding in at least one of size and location. In other words, the first groove has the same or a larger width and/or depth than the width and/or height of the first protrusion. It is formed at a location overlapping, preferably fully overlapping with the location of the first protrusion. The same holds for the second groove and the second protrusion, respectively.

The resistance member preferably has a resistance value higher than that at least one of the column unit, the terminal plate and the cap plate.

The resistance member may be formed of stainless steel or steel or nickel alloy.

In another embodiment, the resistance member comprises a main body and a plating layer, the plating layer at least partially covering the exterior of the main body, preferably fully covering the exterior of the main body. In other words, the plating layer covers the outer surface of the main body in order to prevent corrosion.

The main body may be made of steel or stainless steel or nickel alloy and the plating layer may be made of nickel or tin.

In another embodiment, the resistance member comprises a first resistance unit and a second resistance unit, the first and the second resistance unit having different electrical resistance values. The first resistance unit and the second resistance unit may be placed on top of each other, the first resistance unit being coupled to the cap plate, and the second resistance unit being coupled to the terminal plate. Preferably, the second resistance unit has an electrical resistance higher than that of the first resistance unit.

The outer surfaces of the two resistance units may also be covered by a plating layer or by two plating layers.

The short-circuit inducing member comprises a short-circuit tab arranged on top of the cap plate and a deformable plate attached to the cap plate and being in communication with the interior of the case. Under normal pressure conditions below a set pressure threshold value, the deformable plate has a first configuration, in which it protrudes inside the case, and, when the set pressure threshold value inside the case is exceeded, a second configuration, in which it protrudes outside the case and contacts the short-circuit tab to establish a short-circuit between the first and second electrodes via the cap plate and the resistance member.

According to the present invention, the resistance member having high electrical resistance value is disposed on an electric connection path between the deformable plate and the positive electrode terminal. Accordingly, the external short-circuit current is reduced by increasing the external short-circuit resistance value. Therefore, the penetration characteristic of the external short-circuit current penetrating the electrode assembly may be improved.

### BRIEF DESCRIPTION OF THE DRAWINGS

FIG. 1 is a perspective view of a rechargeable battery according to the first exemplary embodiment of the present invention.
FIG. 2 is a cross-sectional view of FIG. 1 taken along the line II - II.
FIG. 3 is a cross-sectional view illustrating a separation state of a short circuit tab and a deformable plate in the rechargeable battery of FIG. 1.
FIG. 4 is a cross-sectional view illustrating a short-circuit state of a short-circuit tab and a deformable plate in a rechargeable battery of FIG. 1.
FIG. 5 is a perspective view illustrating a separation state of a positive electrode terminal and a cap plate in a rechargeable battery of FIG. 1.
FIG. 6 is a cross-sectional view of FIG. 5 taken along the line VI-VI.
FIG. 7 is a cross-sectional view illustrating a coupling state of a positive electrode terminal and a cap plate in a rechargeable battery according to the second exemplary embodiment of the present invention.
FIG. 8 is a perspective view illustrating a separation state of a positive electrode terminal and a cap plate in a rechargeable battery according to the third exemplary embodiment of the present invention.
FIG. 9 is a cross-sectional view illustrating of FIG. 8 taken along the line IX-IX.

### DETAILED DESCRIPTION OF THE EMBODIMENTS

Hereinafter, the present invention will be described more fully hereinafter with reference to the accompanying drawings, in which exemplary embodiments of the invention are shown. The drawings and description are to be regarded as illustrative in nature and not restrictive. Like reference numerals designate like elements throughout the specification.

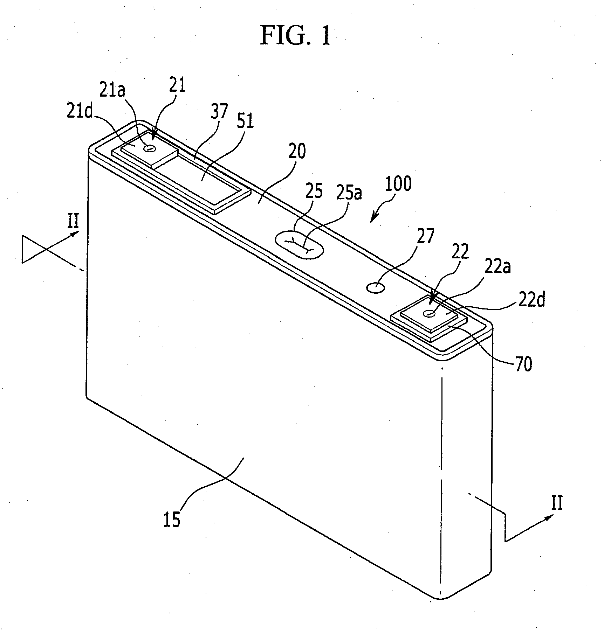

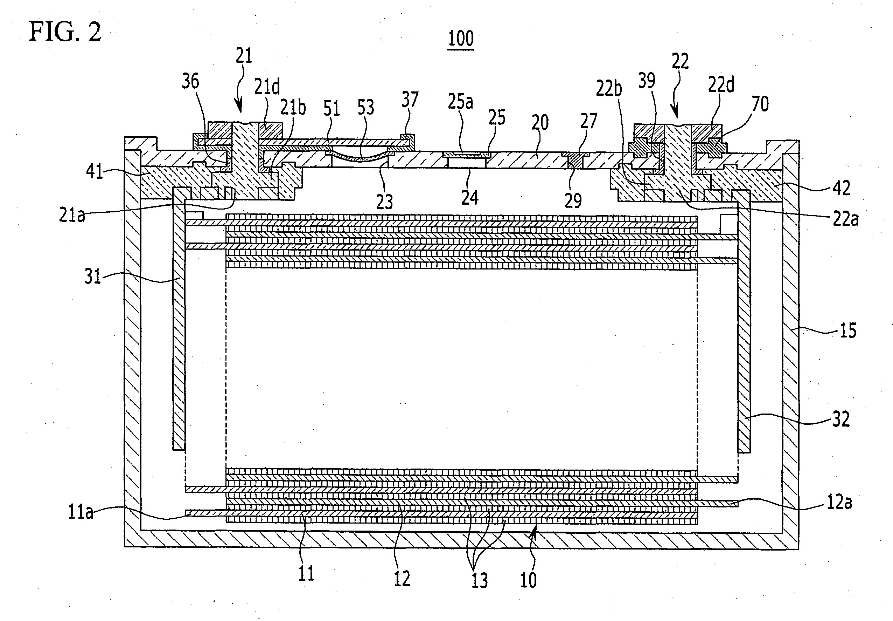

FIG. 1 is a perspective view illustrating a rechargeable battery according to the first exemplary embodiment of the present invention. FIG. 2 is a cross-sectional view of FIG. 1 taken along the line II - II. Referring to FIG. 1 and FIG. 2, a rechargeable battery 100 according to the first exemplary embodiment includes an electrode assembly 10, a case 15 housing the electrode assembly 10, a cap plate 20 connected to an opening of the case 15, a first terminal 21 (hereinafter, a negative electrode terminal) connected to the cap plate 20, and a second terminal 22 (hereinafter, a positive electrode terminal).

For example, the electrode assembly 10 is formed by disposing a first electrode 11 (hereinafter a negative electrode) and a second electrode 12 (hereinafter a positive electrode) at both sides of a separator 13 which is an insulator and winding the negative electrode 11, the separator 12, and the positive electrode 13 in a jelly roll state. Further, the electrode assembly is assembled by stacking negative electrode and positive electrode formed of a single plate with a separator interleaved therebetween or assembled by folding and stacking the negative electrode, the separator, and the positive electrode in a zigzag manner (not shown).

The negative electrode 11 and positive electrode 12 include coated regions formed of a metal plate current collector coated with active material and uncoated regions 11a and 12a formed of an exposed current collector where active material is not coated. The uncoated region 11a of the negative electrode 11 is formed at one end of the negative electrode 11 along the winded negative electrode 11. The uncoated region 12a of the positive electrode 12 is formed at one end of the positive electrode 12 along the winded positive electrode 12. The uncoated regions 11a and 12a are disposed at the both ends of the electrode assembly 10.

For example, the case 15 is formed in a shape of a cuboid to form an internal space for housing the electrode assembly 10 and electrolyte solution and includes an opening at one side of the cuboid to connect the outside and the inside. The opening permits the electrode assembly 10 to be inserted inside the case 15.

The cap plate 20 is formed of a thin plate. The cap plate 20 is installed at the opening of the case for closing and sealing the case 15. The cap plate 20 further includes an electrolyte solution inlet 29 and a vent hole 24. The electrolyte solution inlet 29 permits injecting electrolyte solution inside the case 15 after connecting the cap plate 20 to the case 15. After injecting the electrolyte solution, the electrolyte solution inlet 29 is sealed with a sealing stopper 27.

The vent hole 24 permits discharging of internal pressure of the rechargeable battery 100. The vent hole 24 is closed and sealed with the vent plate 25. The vent plate 25 is opened when the internal pressure of the rechargeable battery 100 reaches at a predetermined pressure. The vent plate 25 includes a notch 25a to lead opening.

The negative electrode terminal 21 and the positive electrode terminal 22 are installed by penetrating the cap plate 20 and are electrically connected to the electrode assembly 10. That is, the negative electrode terminal 21 is electrically connected to the negative electrode 11 of the electrode assembly 10, and the positive electrode terminal 22 is electrically connected to the positive electrode 12. Therefore, the electrode assembly 10 draws out to the outside of the case 15 through the negative electrode terminal 21 and the positive electrode terminal 22.

The negative electrode terminal 21 includes a column unit 21 a installed at a terminal hole of the cap plate 20, a flange 21b formed from an inner side of the case 15 at the column unit 21a and a terminal plate 21d disposed at an outer side of the case 15 and connected to the column 21 a.

A negative electrode gasket 36 is installed between the column unit 21a of the negative electrode terminal 21 and an inner side of the terminal hole of the cap plate 20, thereby sealing between the column 21a of the negative electrode terminal 21 and the cap plate 20. The negative electrode gasket 36 further extends between the flange 21b and the cap plate 20, thereby further sealing the flange 21b and the cap plate 20. That is, the negative electrode gasket 36 prevents electrolyte solution from leaking through the terminal hole by installing the negative electrode terminal at the cap plate 20.

The negative electrode lead tab 31 electrically connects the negative electrode terminal 21 to the negative electrode 11 of the electrode assembly 10. That is, the negative electrode lead tab 31 is connected to a lower end of the column unit 21a for caulking the lower end. The negative electrode lead tab 31 is connected to the lower end of the column unit 21a while being supported at the flange 21b. The negative electrode insulating member 41 is installed between the negative electrode lead tab 31 and the cap plate 20 and electrically insulates the negative electrode lead tab 31 and the cap plate 20.

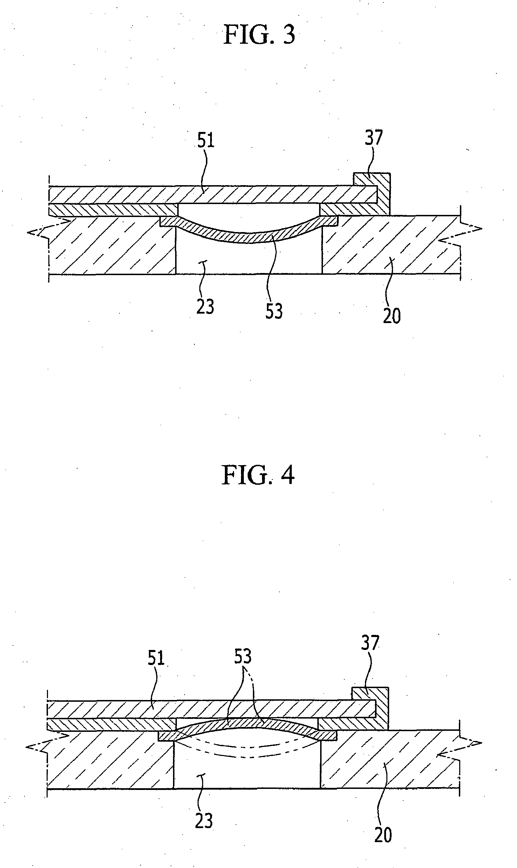

FIG. 3 is a cross-sectional view illustrating a separation state of a short-circuit tab and a deformable plate in the rechargeable battery of FIG. 1. FIG. 4 is a cross-sectional view illustrating a short-circuit state of the short-circuit tab and the deformable plate in the rechargeable battery of FIG. 1. Referring to FIG. 3 and FIG. 4, the rechargeable battery 100 according to the first exemplary embodiment includes an external short-circuit unit installed at the negative electrode terminal 21. The external short-circuit unit short-circuits the negative electrode 11 and the positive electrode 12 from the outside of the case 15 when the internal pressure increases. For example, the external short-circuit unit includes a short-circuit tab 51 and a deformable plate 53, which are separated or short-circuited according to the internal pressure.

Referring to FIG. 1 and FIG. 2 again, the short-circuit tab 51 is disposed at the outside of the cap plate 20 by being electrically connected to the negative electrode terminal 21. The short-circuit tab 51 penetrates the column unit 21a from the outside of the case 15 and is stacked with the terminal plate 21d.

The insulating member 37 is installed between the short-circuit tab 51 and the cap plate 20 and electrically insulates the short-circuit tab 51 and the cap plate 20. The cap plate 20 is electrically connected to the positive electrode terminal 22.

The insulating member 37 further extends between the column unit 21a of the negative electrode terminal 21 and an inner side of the terminal hole of the cap plate 20 from the upper part of the negative electrode gasket 36, thereby further electrically insulating between the column unit 21a of the negative electrode terminal 21 and the cap plate 20.

The short-circuit tab 51 and the terminal plate 21d are connected to an upper part of the column unit 21a by caulking the upper part by stacking and coupling the short-circuit tab 51 and the terminal plate 21d at the upper part of the column unit 21a of the negative electrode terminal 21. Therefore, the short-circuit tab 51 and the terminal plate 21d are supported by the cap plate 20 with the insulating member 37 interleaved.

The deformable plate 53 is deformed and contacts the short-circuit tab 51 when the internal pressure of the rechargeable battery 100 increases. Therefore, the short-circuit tab 51 is electrically connected to the cap plate 21 so as to maintain the short-circuit state of the electrode assembly 10. For this purpose, the deformable plate 53 is installed at a short-circuit hole of the cap plate 20. The short-circuit tab 51 is connected to the negative electrode terminal 21 and extends toward the deformable plate 53. In the short-circuit hole 23, the short-circuit tab 51 and the deformable plate 53 face each other and sustain a separation state (see FIG. 3) or a short-circuit state (see FIG. 4).

For example, the deformable plate 53 is disposed between the insulating member 37 and the cap plate 20 in the short-circuit hole 23. The deformable plate 53 is formed to have an arc shaped cross-section to be convex toward the inner side of the case 15 and electrically connected to the cap plate 20.

When the internal pressure of the case 15 increases, the deformable plate 53 is reversed and protruded to the outer surface of the cap plate 20 through the short-circuit hole 23 (see FIG. 4). Here, the deformable plate 53 is connected to the short-circuit tab 51 and the short-circuit tab 51 is electrically connected to the cap plate 20. That is, the negative electrode 11 of the electrode assembly 10 is short-circuited from the positive electrodes 12. When the positive electrode 11 and the negative electrode 21 are short-circuited, a large amount of current instantly flows between the negative electrode terminal 21 and the positive electrode terminal 22 through the short-circuit tab 21 and the positive electrode terminal 22. Accordingly, the electrode assembly 10 is discharged.

The rechargeable battery 10 of the first exemplary embodiment further includes a structure that improves pass characteristic by reducing the external short-circuit current passing through the electrode assembly 10. The rechargeable battery 100 according to the first exemplary embodiment has a configuration increasing an external short-circuit resistance value in order to reduce the external short-circuit current. For example, as shown in FIG. 2, the rechargeable battery 100 further includes a resistance member 70 disposed on an electric connection path of the deformable plate 53 and the positive electrode terminal 22. The resistance member 70 has a further higher electrical resistance value than other constituent elements of the other electric connection path.

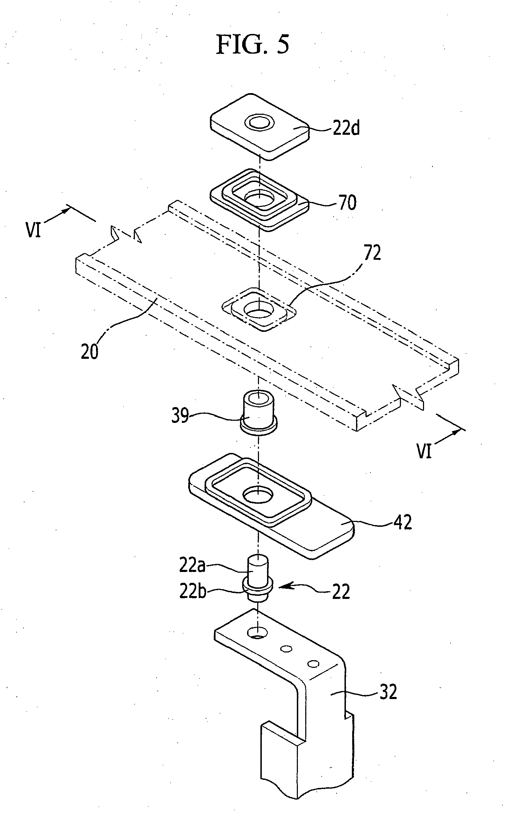

FIG. 5 is a perspective view illustrating a disassemble state of a positive electrode terminal and a cap plate in the rechargeable battery of FIG. 1. Referring to FIG. 1, FIG. 2, and FIG. 5, the positive electrode terminal 22 includes a column unit 22a installed at a terminal hole of the cap plate 20, a flange 22b formed at the column unit 22a inside the case 15, and a resistance member 70 and a terminal plate 22d stacked and coupled at, preferably directly coupled at the column unit 22a by being disposed outside the case 15.

The positive electrode gasket 39 is installed between the column unit 22a of the positive electrode terminal 22 and an inner side of a terminal hole of the cap plate 20 and sealing the column unit 22a of the positive electrode terminal 22 and the cap plate 20. The positive electrode gasket 39 further extends between the flange 22b and the cap plate 20, thereby further sealing between the flange 22b and the cap plate 20. Also, the positive electrodes gasket 39 further extends between the column unit 22a of the positive electrode terminal 22 and an inner side of a hole of the resistance member 70, thereby sealing between the column unit 22a of the positive electrode terminal 22 and an inner side of a hole of the resistance member 70. That is, the positive electrodes gasket 39 prevents electrolyte solution from leaking through a terminal hole by installing the positive electrode terminal 22 at the cap plate 20.

The positive electrode lead tab 32 electrically connects the positive electrode terminal 22 to the electrode assembly 10. That is, the positive electrode lead tab 32 is coupled to the lower end of the column unit 22a for caulking the lower end. Accordingly, the positive electrode lead tab 32 is coupled to the lower end of the column 22a while being supported by the flange 22b. The positive electrode insulating member 42 is disposed between the positive electrode lead tab 32 and the cap plate 20 and electrically insulating the positive electrode lead tab 32 and the cap plate 20.

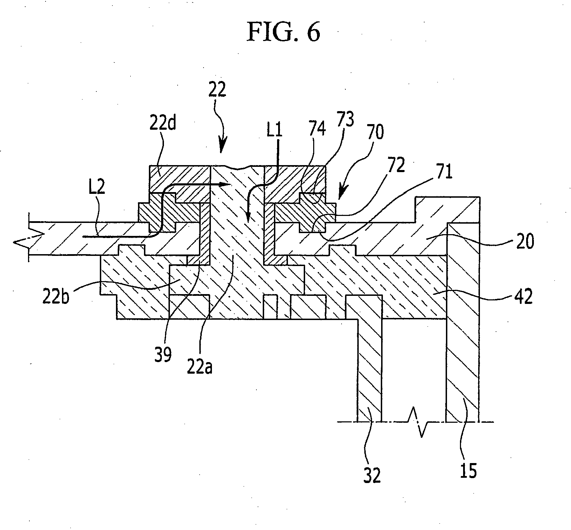

FIG. 6 is a cross-sectional view of FIG. 5 taken along the line VI-VI. Referring to FIG. 6, the resistance member 70 and terminal plate 22d are connected to an upper end of the column unit 22a by stacking and connecting the resistance member 70 and the terminal plate 22d at the upper end of the column unit 22a of the positive electrode terminal 22 for caulking the upper end. Therefore, the resistance member 70 and the terminal plate 22d are supported by the cap plate 20. Here, the resistance member 70 electrically connects the cap plate 20 and the column unit 22a.

The resistance member 70 includes a downward protrusion 71 facing the cap plate 20 and an upward protrusion 73 facing the terminal plate 22d. The downward protrusion 71 is coupled at, preferably directly at a groove 72 of the cap plate 20 and the upward protrusion 73 is coupled to, preferably directly to a groove 74 of the terminal plate 22d in a state of the positive electrode terminal 22 assembled at the cap plate 20. The downward protrusion 71 and the groove 72 facilitate setting up an installation location of the resistance member 70 on the cap plate 20. The upward protrusion 73 and the groove 74 facilitate setting up an installation location of the terminal plate 22d on the resistance member 70.

Referring to FIG. 2 and FIG. 6, the deformable plate 53 and the positive electrode terminal 22 form an electric connection path therebetween through the cap plate 20 and the resistance member 70. In case of external short-circuit, the resistance member 70 increases the external short-circuit resistance value between the negative electrode terminal 21 and the positive electrode terminal 22 without influencing the output through the negative electrode terminal 21 and the positive electrode terminal 22, thereby reducing the external short-circuit current.

The resistance member 70 has a resistance value higher than that of the column unit 22a, the terminal plate 22d, and the cap plate 20. For example, the terminal plate 22d is formed of aluminum, and the resistance member 70 is formed of stainless steel or steel or nickel alloy.

That is, when the rechargeable battery 100 operates normally (when the deformable plate and the short-circuit tab are separated as shown in FIG. 3), a first electric connection path L1 is formed between the column unit 22a of the positive electrode terminal 22 and the terminal plate 22d (see L1 of FIG. 6). Here, the resistance member 70 does not influence the output of the rechargeable battery in spite of a high resistance value.

On the other hand, when the rechargeable battery 100 is externally short-circuited (when the deformable palate contacts the short-circuit tab as shown in FIG. 4), the second electric connection path L2 is formed through the column unit 22a of the positive electrode terminal 22, the terminal plate 22d, the resistance member 70, and the cap plate 20 (see L2 of FIG. 6). Here, the resistance member 70 reduces the external short-circuit current by increasing the external short-circuit resistance value of the externally short-circuited rechargeable battery 100. Therefore, the penetration characteristic of the external short-circuit current may be stabilized. Here, the external short-circuit current penetrates the electrode assembly 10.

Hereinafter, another exemplary embodiment of the present inventions will be described. In comparison with the above described first exemplary embodiment, different constituent elements will be described without describing the same constituent elements.

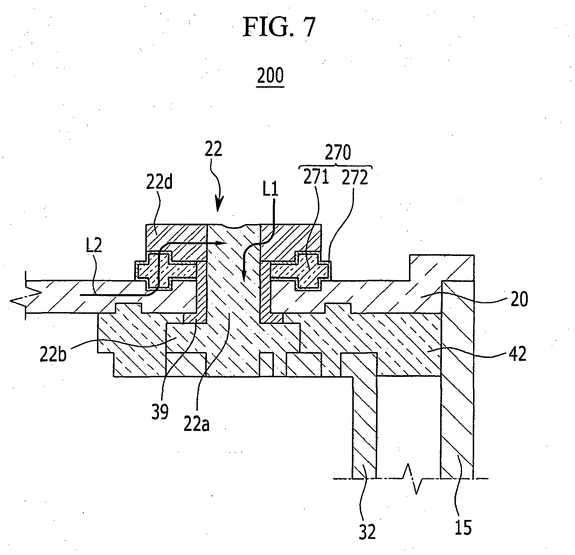

FIG. 7 is a cross-sectional view illustrating a connection state of a positive electrode terminal and a cap plate in a rechargeable battery according to the second exemplary embodiment of the present invention.

Unlike the resistance member 70 formed of stainless steel or steel or nickel alloy in the rechargeable battery 100 according to the first exemplary embodiment, a resistance member 270 of a rechargeable battery 200 according to the second exemplary embodiment includes a main body 271 made of stainless steel or steel or nickel alloy and a plating layer 272 formed on a surface of the main body 271. Such a plating layer 272 may be made of nickel (Ni) and tin (Sn). In the resistance member 270, the plating layer 272 prevents the main body 271 from corroding. Thus, the outer surface of the resistance member 270 may be at least partially covered by, preferably fully covered by the plating layer 272.

When the rechargeable battery 200 operates normally, the first electric connection path L1 is formed between the column unit 22a of the positive electrode terminal 22 and the terminal plate 22d. Here, the main body 271 and the plating layer 272 do not influence the output of the normally operating rechargeable battery 200 although the main body 271 and the plating layer 272 have an electrical resistance value higher than the column unit 22a, the terminal plate 22d, and the cap plate 20.

On the contrary, when the rechargeable battery 200 is externally short-circuited, the second electric connection path L2 is formed through the column unit 22a of the positive electrode terminal 22, the terminal plate 22d, the main body 271, the plating layer 272, and the cap plate 20. Here, the main body 271 and the plating layer 272 reduces the external short-circuit current by increasing the external short-circuit resistance value of the externally short-circuited rechargeable battery 200. Therefore, the penetration characteristic of the external short-circuit current penetrating the electrode assembly 10 is stabilized.

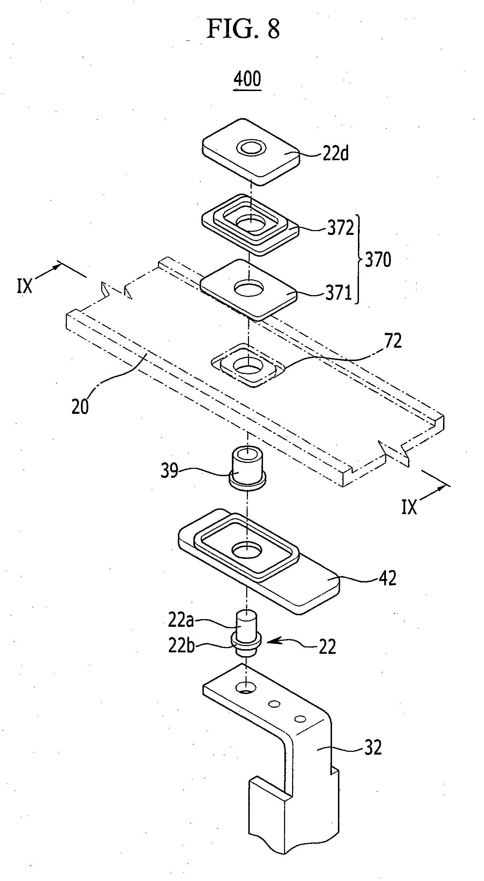

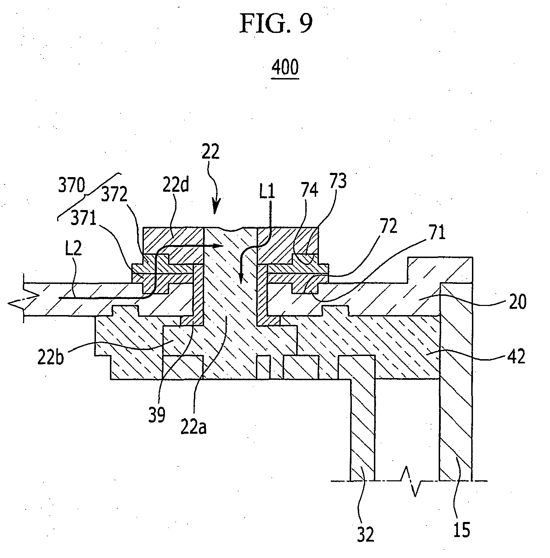

FIG. 8 is a perspective view illustrating a disassemble state of a positive electrode terminal and a cap plate in a rechargeable battery according to the third exemplary embodiment of the present invention. FIG. 9 is a cross-sectional view of FIG. 8 taken along the line IX-IX.

Unlike the resistance member 270 having the main body 271 made of steel or stainless steel or nickel alloy and the plating layer 272 in the rechargeable battery 200 according to the second exemplary embodiment, a resistance member 270 of a rechargeable battery 400 according to the third exemplary embodiment includes a first resistance unit 371 and a second resistance unit 372 made of different materials.

For example, the first resistance unit 371 may be made of aluminum, and the second resistance unit 372 may be made of stainless steel having an electrical resistance value higher than that of the first resistance unit 371. The second resistance unit 372 has an electrical resistance value higher than the electrical resistance values of the column unit 22a, the terminal plate 22d, and the cap plate 20. Further, the first and second resistance units 371 and 372 may be made of stainless steel and aluminum, respectively.

The first resistance unit 371 is connected to the cap plate 20 through a downward protrusion 71 facing the cap plate 20. The second resistance unit 372 is coupled to, preferably directly to the terminal plate 22d through an upward protrusion 73 facing the terminal plate 22d. In a state that the positive electrode terminal 22 is assembled to the cap plate 20, the downward protrusion 71 and the groove 72 facilitate an installation location of the first resistance unit 371 on the cap plate 20. The upward protrusion 73 and the groove 74 facilitate an installation location of the terminal plate 22d on the second resistance unit 372.

That is, the first electric connection path L1 is formed between the column unit 22a of the positive electrode terminal 22 and the terminal plate 22d when the rechargeable battery 400 normally operates. Here, the first and second resistance units 371 and 372 do not influence the output of the normally operating rechargeable battery 400 in spite of high electrical resistance value.

On the contrary, when the rechargeable battery 400 is externally short-circuited, the second electric connection path L2 is formed through the column unit 22a of the positive electrode terminal 22, the terminal plate 22d, the first and second resistance units 371 and 372, and the cap plate 20. Here, the first and second resistance units 371 and 372 reduce the external short-circuit current by increasing the external short-circuit resistance value of the externally short-circuited rechargeable battery 400. Accordingly, the penetration characteristic of the external short-circuit current penetrating the electrode assembly 10 may be stabilized.

The outer surfaces of the two resistance units may also be covered by a plating layer as described in a previous embodiment or by two plating layers.

## Claims

1. A rechargeable battery (100) comprising:
an electrode assembly (10) comprising a first electrode (11), a second electrode (12), and a separator (13) between the first electrode (11) and the second electrode (12),
a case (15) for accommodating the electrode assembly (10) therein,
a cap plate (20) for closing an opening of the case (15),
an electrode terminal (22) protruding to the outside of the case (15) and electrically connected to the second electrode (12), and
**characterized in that**
a short-circuit inducing member is provided, comprising a deformable plate (53) which is installed within a short circuit hole of the cap plate (20),adapted to establish a short-circuit between the electrode terminal (22) and the first electrode (11) via the cap-plate (20),
and
a resistance member (70) is provided on the outside of the case (15) between and electrically connecting the electrode terminal (22) and the cap-plate (20), the resistance member (70) having an electrical resistance greater than the resistance of the cap-plate (20) and/or the resistance of the electrode terminal (22), wherein the electrode terminal (22) comprises a terminal plate (22d) provided on top of the cap plate (20), and wherein the resistance member (70) is provided between the cap plate (20) and the terminal plate (22d).

2. Rechargeable battery (100) of claim 1, wherein the electrode terminal (22) further comprises a column unit (22a) protruding through the cap plate (20), a flange (22b) formed at the column unit (22a) inside the case (15), and wherein the terminal plate (22d) is coupled to the column unit (22a).

3. Rechargeable battery (100) of any of the previous claims wherein the electrode terminal (22) further comprises a gasket (39) installed between the column unit (22a) and the cap plate (20), wherein the resistance member (70) is provided at the column unit (22a) and electrically separated from the column unit (22a) by the gasket (39).

4. Rechargeable battery (100) of one of any of the previous claims, wherein the resistance member (70) comprises an first protrusion (73) facing the terminal plate (22d) and the terminal plate (22d) comprises a first groove (74) corresponding to the first protrusion (73).

5. Rechargeable battery (100) of one of any of the previous claims, wherein the resistance member (70) comprises a second protrusion (71) facing the cap plate (20), wherein the cap plate (20) comprises a second groove (72) corresponding to the second protrusion (71).

6. Rechargeable battery (100) of one of any of the previous claims, wherein the resistance member (70) has a resistance value higher than that at least one of the column unit (22a), the terminal plate (22d) and the cap plate (20).

7. Rechargeable battery (100) of one of the previous claims, wherein the resistance member (70) is formed of stainless steel or steel or nickel alloy.

8. Rechargeable battery (100) of one of the previous claims, wherein the resistance member (270) comprises a main body (271) and a plating layer (272), the plating layer at least partially covering the exterior of the main body (271).

9. Rechargeable battery (100) of claim 8, wherein the main body (271) is made of steel or stainless steel or nickel alloy and the plating layer (272) is made of nickel or tin.

10. Rechargeable battery (100) of one of claim 1 to 7, wherein the resistance member (370) comprises a first resistance unit (371) and a second resistance unit (372), the first and the second resistance unit (371, 372) having different electrical resistance values.

11. Rechargeable battery (100) of claim 10, wherein the first resistance unit (371) and the second resistance unit (372) are placed on top of each other, the first resistance unit (371) being coupled to the cap plate (20), and the second resistance unit (372) being coupled to the terminal plate (22d).

12. Rechargeable battery (100) of claim 10 or 11, wherein the second resistance unit (372) has an electrical resistance higher than that of the first resistance unit (371).

13. Rechargeable battery (100) of one of the previous claims, wherein the short-circuit inducing member comprises a short-circuit tab (51) arranged on top of the cap plate (20) and a deformable plate (53) attached to the cap plate (20) and being in communication with the interior of the case (15).

14. Rechargeable battery (100) of claim 13, wherein, under normal pressure conditions below a set pressure threshold value, the deformable plate (53) has a first configuration, in which it protrudes inside the case (15), and, when the set pressure threshold value inside the case (15) is exceeded, a second configuration, in which it protrudes outside the case (15) and contacts the short-circuit tab (51) to establish a short-circuit between the first and second electrodes (11, 12) via the cap plate (20) and the resistance member (70).

## Patentansprüche

1. Wiederaufladbare Batterie (100), umfassend:
eine Elektrodenanordnung (10) umfassend eine erste Elektrode (11), eine zweite Elektrode (12) sowie einen Separator (13) zwischen der ersten Elektrode (11) und der zweiten Elektrode (12),
ein Gehäuse (15) zum Aufnehmen der Elektrodenanordnung (10) in diesem,
eine Abdeckplatte (20) zum Verschließen einer Öffnung des Gehäuses (15),
eine Elektrodenklemme (22), die zur Außenseite des Gehäuses (15) vorsteht und elektrisch mit der zweiten Elektrode (12) verbunden ist, und
**dadurch gekennzeichnet, dass**
ein einen Kurzschluss hervorrufendes Element vorgesehen ist, umfassend eine verformbare Platte (53), die in einem Kurzschlussloch der Abdeckplatte (20) angebracht ist und ausgebildet ist, über die Abdeckplatte (20) einen Kurzschluss zwischen der Elektrodenklemme (22) und der ersten Elektrode (11) zu erzeugen,
und
ein Widerstandselement (70) an der Außenseite des Gehäuses (15) zwischen der Elektrodenklemme (22) und der Abdeckplatte (20), diese elektrisch verbindend, vorgesehen ist, wobei das Widerstandselement (70) einen elektrischen Widerstand aufweist, der größer als der Widerstand der Abdeckplatte (20) und/oder der Widerstand der Elektrodenklemme (22) ist, wobei die Elektrodenklemme (22) eine über der Abdeckplatte (20) vorgesehene Klemmenplatte (22d) umfasst, und wobei das Widerstandselement (70) zwischen der Abdeckplatte (20) und der Klemmenplatte (22d) vorgesehen ist.

2. Wiederaufladbare Batterie (100) nach Anspruch 1, wobei die Elektrodenklemme (22) ferner eine aus der Abdeckplatte (20) vorstehende Säuleneinheit (22a) umfasst, mit einem an der Säuleneinheit (22a) innerhalb des Gehäuses (15) ausgebildeten Flansch (22b), und wobei die Klemmenplatte (22d) mit der Säuleneinheit (22a) verbunden ist.

3. Wiederaufladbare Batterie (100) nach einem der vorstehenden Ansprüche, wobei die Elektrodenklemme (22) ferner eine zwischen der Säuleneinheit (22a) und der Abdeckplatte (20) angebrachte Dichtung (39) umfasst, wobei das Widerstandselement (70) an der Säuleneinheit (22a) vorgesehen ist und durch die Dichtung (39) elektrisch von der Säuleneinheit (22a) getrennt ist.

4. Wiederaufladbare Batterie (100) nach einem der vorstehenden Ansprüche, wobei das Widerstandselement (70) einen der Klemmenplatte (22d) zugewandten ersten Vorsprung (73) umfasst und die Klemmenplatte (22d) eine dem ersten Vorsprung (73) entsprechende erste Aussparung (74) umfasst.

5. Wiederaufladbare Batterie (100) nach einem der vorstehenden Ansprüche, wobei das Widerstandselement (70) einen der Abdeckplatte (20) zugewandten zweiten Vorsprung (71) umfasst, wobei die Abdeckplatte (20) eine dem zweiten Vorsprung (71) entsprechende zweite Aussparung (72) umfasst.

6. Wiederaufladbare Batterie (100) nach einem der vorstehenden Ansprüche, wobei das Widerstandselement (70) einen Widerstandswert aufweist, der höher ist als der von mindestens einem der Säuleneinheit (22a), der Klemmenplatte (22d) und der Abdeckplatte (20).

7. Wiederaufladbare Batterie (100) nach einem der vorstehenden Ansprüche, wobei das Widerstandselement (70) aus Edelstahl oder Stahl oder Nickellegierung gebildet ist.

8. Wiederaufladbare Batterie (100) nach einem der vorstehenden Ansprüche, wobei das Widerstandselement (270) einen Hauptkörper (271) und eine Überzugsschicht (272) umfasst, wobei die Überzugsschicht das Äußere des Hauptkörpers (271) zumindest teilweise bedeckt.

9. Wiederaufladbare Batterie (100) nach Anspruch 8, wobei der Hauptkörper (271) aus Stahl oder Edelstahl oder Nickellegierung besteht, und die Überzugsschicht (272) aus Nickel oder Zinn besteht.

10. Wiederaufladbare Batterie (100) nach einem der Ansprüche 1 bis 7, wobei das Widerstandselement (370) eine erste Widerstandseinheit (371) und eine zweite Widerstandseinheit (372) umfasst, wobei die erste und die zweite Widerstandseinheit (371, 372) unterschiedliche elektrische Widerstandswerte aufweisen.

11. Wiederaufladbare Batterie (100) nach Anspruch 10, wobei die erste Widerstandseinheit (371) und die zweite Widerstandseinheit (372) übereinander angebracht sind, wobei die erste Widerstandseinheit (371) mit der Abdeckplatte (20) verbunden ist und die zweite Widerstandseinheit (372) mit der Klemmenplatte (22d) verbunden ist.

12. Wiederaufladbare Batterie (100) nach Anspruch 10 oder 11, wobei die zweite Widerstandseinheit (372) einen elektrische Widerstand aufweist, der höher ist als der der ersten Widerstandseinheit (371).

13. Wiederaufladbare Batterie (100) nach einem der vorstehenden Ansprüche, wobei das einen Kurzschluss hervorrufende Element eine Kurzschlussfahne (51) umfasst, die über der Abdeckplatte (20) angeordnet ist, sowie eine verformbare Platte (53), die an der Abdeckplatte (20) befestigt und mit dem Inneren des Gehäuses (15) in Verbindung steht.

14. Wiederaufladbare Batterie (100) nach Anspruch 13, wobei unter normalen Druckbedingungen unterhalb eines eingestellten Druckschwellenwertes die verformbare Platte (53) eine erste Konfiguration aufweist, in der sie innerhalb des Gehäuses (15) vorspringt, und bei Überschreiten des eingestellten Druckschwellenwertes innerhalb des Gehäuses (15) eine zweite Konfiguration aufweist, in der sie außerhalb des Gehäuses (15) vorspringt und die Kurzschlussfahne (51) kontaktiert, um einen Kurzschluss zwischen den ersten und zweiten Elektroden (11, 12) über die Abdeckplatte (20) und das Widerstandsglied (70) zu erzeugen.

## Revendications

1. Batterie rechargeable (100) comprenant :
un ensemble d'électrodes (10) comprenant une première électrode (11), une seconde électrode (12) et un séparateur (13) entre la première électrode (11) et la seconde électrode (12),
un boîtier (15) pour loger l'ensemble d'électrodes (10) à l'intérieur de ce dernier,
une plaque formant capuchon (20) pour fermer une ouverture du boîtier (15),
une borne d'électrode (22) faisant saillie à l'extérieur du boîtier (15) et électriquement connectée à la seconde électrode (12), et
**caractérisée en ce que** :
on prévoit un élément d'induction de court-circuit comprenant une plaque déformable (53) qui est installée à l'intérieur d'un trou de court-circuit de la plaque formant capuchon (20), adapté pour établir un court-circuit entre la borne d'électrode (22) et la première électrode (11) via la plaque de capuchon (20),
et
un élément de résistance (70) est prévu à l'extérieur du boîtier (15) entre et connectant électriquement la borne d'électrode (22) et la plaque de capuchon (20), l'élément de résistance (70) ayant une résistance électrique supérieure à la résistance de la plaque formant capuchon (20) et/ou la résistance de la borne d'électrode (22), dans laquelle la borne d'électrode (22) comprend une plaque de borne (22d) prévue sur la partie supérieure de la plaque formant capuchon (20), et dans laquelle l'élément de résistance (70) est prévu entre la plaque formant capuchon (20) et la plaque de borne (22d).

2. Batterie rechargeable (100) selon la revendication 1, dans laquelle la borne d'électrode (22) comprend en outre une unité de colonne (22a) faisant saillie à travers la plaque formant capuchon (20), une bride (22b) formée au niveau de l'unité de colonne (22a) à l'intérieur du boîtier (15), et dans laquelle la plaque de borne (22d) est couplée à l'unité de colonne (22a).

3. Batterie rechargeable (100) selon l'une quelconque des revendications précédentes, dans laquelle la borne d'électrode (22) comprend en outre un joint (39) installé entre l'unité de colonne (22a) et la plaque formant capuchon (20), dans laquelle l'élément de résistance (70) est prévu au niveau de l'unité de colonne (22a) et électriquement séparé de l'unité de colonne (22a) par le joint (39).

4. Batterie rechargeable (100) selon l'une quelconque des revendications précédentes, dans laquelle l'élément de résistance (70) comprend une première saillie (73) faisant face à la plaque de borne (22d) et la plaque de borne (22d) comprend une première rainure (74) correspondant à la première saillie (73).

5. Batterie rechargeable (100) selon l'une quelconque des revendications précédentes, dans laquelle l'élément de résistance (70) comprend une seconde saillie (71) faisant face à la plaque formant capuchon (20), dans laquelle la plaque formant capuchon (20) comprend une seconde rainure (72) correspondant à la seconde saillie (71).

6. Batterie rechargeable (100) selon l'une quelconque des revendications précédentes, dans laquelle l'élément de résistance (70) a une valeur de résistance supérieure à celle d'au moins l'une parmi l'unité de colonne (22a), la plaque de borne (22d) et la plaque formant capuchon (20).

7. Batterie rechargeable (100) selon l'une quelconque des revendications précédentes, dans laquelle l'élément de résistance (70) est formé à partir d'acier inoxydable ou d'acier ou d'alliage de nickel.

8. Batterie rechargeable (100) selon l'une des revendications précédentes, dans laquelle l'élément de résistance (270) comprend un corps principal (271) et une couche de placage (272), la couche de plaquage recouvrant au moins partiellement l'extérieur du corps principal (271).

9. Batterie rechargeable (100) selon la revendication 8, dans laquelle le corps principal (271) est réalisé à partir d'acier ou d'acier inoxydable ou d'alliage de nickel et la couche de placage (272) est réalisée à partir de nickel ou d'étain.

10. Batterie rechargeable (100) selon l'une des revendications 1 à 7, dans laquelle l'élément de résistance (370) comprend une première unité de résistance (371) et une seconde unité de résistance (372), la première et la seconde unité de résistance (371, 372) ayant des valeurs de résistance électrique différentes.

11. Batterie rechargeable (100) selon la revendication 10, dans laquelle la première unité de résistance (371) et la seconde unité de résistance (372) sont placées l'une sur l'autre, la première unité de résistance (371) étant couplée à la plaque formant capuchon (20) et la seconde unité de résistance (372) étant couplée à la plaque de borne (22d).

12. Batterie rechargeable (100) selon la revendication 10 ou 11, dans laquelle la seconde unité de résistance (372) a une résistance électrique supérieure à celle de la première unité de résistance (371).

13. Batterie rechargeable (100) selon l'une des revendications précédentes, dans laquelle l'élément d'induction de court-circuit comprend une languette de court-circuit (51) agencée sur le dessus de la plaque formant capuchon (20) et une plaque déformable (53) fixée à la plaque formant capuchon (20) et étant en communication avec l'intérieur du boîtier (15).

14. Batterie rechargeable (100) selon la revendication 13, dans laquelle, dans des conditions de pression normale inférieures à une valeur de seuil de pression de consigne, la plaque déformable (53) a une première configuration dans laquelle elle fait saillie à l'intérieur du boîtier (15) et lorsque la valeur de seuil de pression de consigne à l'intérieur du boîtier (15) est dépassée, une seconde configuration dans laquelle elle fait saillie à l'extérieur du boîtier (15) et entre en contact avec la languette de court-circuit (51) pour établir un court-circuit entre les première et seconde électrodes (11, 12) via la plaque formant capuchon (20) et l'élément de résistance (70).
